(19) **Europäisches Patentamt / European Patent Office / Office européen des brevets**

(11) **EP 3 713 153 B1**

(12) # EUROPEAN PATENT SPECIFICATION

(45) Date of publication and mention
of the grant of the patent:
**03.08.2022 Bulletin 2022/31**

(21) Application number: **20174191.5**

(22) Date of filing: **15.06.2016**

(51) International Patent Classification (IPC):
**H04L 12/18** (2006.01)     **H04W 4/06** (2009.01)
**H04W 52/02** (2009.01)

(52) Cooperative Patent Classification (CPC):
**H04L 12/189; H04W 4/06; H04W 52/0225;
H04W 76/28;** Y02D 30/70

(54) **METHOD AND APPARATUS FOR GROUP COMMUNICATION IN WIRELESS COMMUNICATION SYSTEM**

VERFAHREN UND VORRICHTUNG ZUR GRUPPENKOMMUNIKATION IN EINEM DRAHTLOSKOMMUNIKATIONSSYSTEM

PROCÉDÉ ET APPAREIL POUR COMMUNICATION DE GROUPE DANS UN SYSTÈME DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2015 US 201562175697 P
29.06.2015 KR 20150092556
04.09.2015 KR 20150125859**

(43) Date of publication of application:
**23.09.2020 Bulletin 2020/39**

(62) Document number(s) of the earlier application(s) in
accordance with Art. 76 EPC:
**16811932.9 / 3 308 501**

(73) Proprietor: **Samsung Electronics Co., Ltd.
Gyeonggi-do 16677 (KR)**

(72) Inventors:
• **Song, Junhyuk
16677 Suwon-si (KR)**

• **Kim, Daejoong
16677 Suwon-si (KR)**
• **Kim, Juyoung
16677 Suwon-si (KR)**
• **Lee, Daewoo
16677 Suwon-si (KR)**
• **Lim, Hyungtaig
16677 Suwon-si (KR)**
• **Kim, Minjae
16677 Suwon-si (KR)**

(74) Representative: **Nederlandsch Octrooibureau
P.O. Box 29720
2502 LS The Hague (NL)**

(56) References cited:
**EP-A1- 2 234 420        EP-A1- 2 469 953
US-A1- 2014 086 208**

Description

[Technical Field]

The present disclosure relates to a method and an apparatus for group communication in a wireless communication system. More particularly, the present disclosure relates to a method and an apparatus for group communication between a base station and a terminal using a multimedia broadcast/multicast service (MBMS).

[Background Art]

In general, mobile communication systems were developed to provide a voice service while securing user's mobility. However, the mobile communication system field has expanded gradually to data services in addition to voice services, and the mobile communication system is presently capable of providing high-speed data services. However, in the mobile communication system that is currently providing a high-speed data service, since resources are short and users demand higher-speed services, there has been a need for a greatly developed mobile communication system.

On the other hand, unlike a voice service, resources that can be allocated for a data service are determined in accordance with the amount of data to be transmitted and a channel situation. Accordingly, in a wireless communication system, such as a mobile communication system, a scheduler manages allocation of transmission resources in consideration of the amount of resources to be transmitted, the channel situation, and the amount of data. Such management is performed in the same manner even in a long term evolution (LTE) system that is one of the next-generation mobile communication systems, and in this case, a scheduler that is located in a base station manages and allocates wireless transmission resources.

Recently, discussions on LTE-advanced (LTE-A) communication system which can improve a transmission speed through grafting of various new technologies on an LTE communication system have been regularized. The LTE-A system includes multimedia broadcast/multicast service (MBMS) improvement. The MBMS (in the present disclosure, it is used interchangeably with evolved MBMS (eMBMS)) is a broadcasting service that is provided through the LTE system.

The MBMS is a service for simultaneously transmitting data packets to plural users, and if the users exist in the same cell, the MBMS transmits multimedia data to the respective users in the cell based on internet protocol (IP) multicast. As described above, in order to transmit the multimedia data, the MBMS enables respective cells to share necessary resources, and thus the plural users can receive the same multimedia data.

In particular, in order to make it possible to perform one-to-many group communication regardless of the number of public safety network terminals located in a cell in a public safety network, group communication that is used in LTE communication supports downlink broadcasting communication (eMBMS).

EP 2 234 420 A1 describes a method of transmitting a paging signal to a mobile terminal in an MBMS dedicated cell. While receiving the broadcast type data transmitted from the MBMS dedicated cell, the mobile terminal makes a notification of an MBMS receiving state via the unicast cell or the unicast/MBMS-mixed cell to transmit information for identifying the MBMS dedicated cell which is transmitting the broadcast type data which the mobile terminal is receiving, and the communication system transmits a paging signal to the mobile terminal currently receiving the broadcast type data transmitted from the MBMS dedicated cell on the basis of a tracking area (Tracking Area) in which the mobile terminal is tracked, the tracking area being determined on the basis of the information transmitted.
US 2014/0086208 A1 describes a method wherein a wireless transmit/receive unit (WTRU) communicates with a base station using a first base station operating frequency and a set of cell configuration parameters. The WTRU receives information indicating a second base station operating frequency to use for communications with the base station at a given time. The WTRU communicates with the base station using the second base station operating frequency and the same set of cell configuration parameters on or after the given time.

The above information is presented as background information only to assist with an understanding of the present disclosure. No determination has been made, and no assertion is made, as to whether any of the above might be applicable as prior art with regard to the present disclosure.

[Disclosure of Invention]

[Technical Problem]

According to the downlink eMBMS transmission service of the LTE communication that is used in the public safety network, the sampling cycle of a transmitted audio signal is short (e.g., in the unit of 20 ms), and thus a multicast channel scheduling period (MSP) should be scheduled in short periods. In this case, the terminal should continuously monitor radio frames, and this may cause battery power consumption of the terminal to be increased.

**[Solution to Problem]**

The present invention is defined in the appended independent claims to which reference should be made. Advantageous features are set out in the appended dependent claims.

**[Advantageous Effects of Invention]**

According to the aspects of the present disclosure, even if terminals that perform group communication with a base station through an MBMS receive an MBMS service for a long time, the terminals perform DRX of the MBMS service as set by the base station, and thus battery power consumption of the terminals can be reduced.

Further, according to the aspects of the present disclosure, even if the terminals perform DRX, the base station transmits data based on the DRX cycle of the terminals, and thus there is no loss of data to cause inaccurate communication.

**[Brief Description of Drawings]**

The above and other aspects, features, and advantages of certain embodiments of the present disclosure will be more apparent from the following description taken in conjunction with the accompanying drawings, in which:

FIG. 1 is a diagram explaining group communication using an evolved multi broadcast multicast system (eMBMS) in a public safety - long term evolution (PS-LTE) system according to an embodiment of the present disclosure;

FIG. 2 is a diagram explaining a discontinuous reception (DRX) operation of a unicast terminal in an LTE system;

FIG. 3 is a diagram explaining how a terminal performs monitoring of channel scheduling information in accordance with 80 ms periodic continuous reception operation using an eMBMS;

FIG. 4 is a diagram explaining the structure of multicast scheduling information (MSI);

FIG. 5 is a diagram explaining data reception using a DRX operation in the case where a terminal uses an eMBMS according to an embodiment of the present disclosure;

FIG. 6 is a diagram explaining signals transmitted and received between a base station and a multi-cell/multicast coordination entity (MCE);

FIG. 7 is a diagram explaining the whole call process in which a session of eMBMS between a terminal, a base station, and an MCE starts according to an embodiment of the present disclosure;

FIG. 8 is a diagram explaining a call process using DRX operation of an eMBMS between a terminal, a base station, and a broadcast multicast - service center (BM-SC) according to an embodiment of the present disclosure;

FIG. 9 is a diagram explaining how a base station supports DRX operation;

FIG. 10 is a block diagram illustrating the internal configuration of a base station according to an embodiment of the present disclosure;

FIG. 11 is a block diagram illustrating the internal configuration of an MCE according to an embodiment of the present disclosure;

FIG. 12 is a block diagram illustrating the internal configuration of a terminal according to an embodiment of the present disclosure;

FIG. 13 is a diagram explaining a procedure in which a DRX parameter, being limited to a public safety network call, is transferred from an MCE to an evolved node B (eNB) as a session of an eMBMS between a terminal, a base station, and an MCE starts according to an embodiment not forming part of the claimed invention;

FIG. 14 is a diagram explaining a procedure in which a push to talk (PTT) server generates and transfers a DRX parameter, being limited to a public safety network call, to a terminal and an eNB as a session of an eMBMS between a terminal, a base station, and an MCE starts according to an embodiment not forming part of the claimed invention;

FIG. 15 is a block diagram illustrating the internal configuration of a terminal through which a modem receives a DRX parameter as an LTE message according to an embodiment not forming part of the claimed invention;

FIG. 16 is a block diagram illustrating the internal configuration of a terminal through which a PTT application of the terminal receives a DRX parameter as an upper application message and a modem under eMBMS middleware receives the DRX parameter according to an embodiment not forming part of the claimed invention;

FIG. 17 is a block diagram illustrating the internal configuration of a terminal through which a PTT application of the terminal receives a DRX parameter as an upper application message and the application operates as a DRX according to an embodiment not forming part of the claimed invention; and

FIG. 18 is a diagram explaining a procedure in which a PTT server generates and transfers a DRX parameter, being limited to a public safety network call, to a terminal in the form of a session description protocol (SDP) of a session initiation protocol (SIP) as a session of an eMBMS between a terminal, a base station, and an MCE starts according to an embodiment not forming part of the claimed invention.

Throughout the drawings, it should be noted that like reference numbers are used to depict the same or similar elements, features, and structures.

**[Mode for the Invention]**

The following description with reference to the accompanying drawings is provided to assist in a comprehensive understanding of various embodiments of the present disclosure as defined by the claims. It includes various specific details to assist in that understanding, but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

For the same reason, in the accompanying drawings, some constituent elements are exaggerated, omitted, or roughly illustrated. Further, sizes of some constituent elements may not completely reflect the actual sizes thereof. In the drawings, the same drawing reference numerals are used for the same elements across various figures.

The aspects and features of the present disclosure and methods for achieving the aspects and features will be apparent by referring to the embodiments to be described in detail with reference to the accompanying drawings. However, the present disclosure is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the disclosure, and the present disclosure is only defined within the scope of the appended claims. In the entire description of the present disclosure, the same drawing reference numerals are used for the same elements across various figures.

The present disclosure will be described herein with reference to the accompanying drawings illustrating block diagrams and flowcharts explaining a method and an apparatus for supporting facility control of a terminal according to various embodiments of the present disclosure. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Each block of the flowchart illustrations may represent a module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently or the blocks may sometimes be executed in the reverse order, depending upon the functionality involved.

The term "unit", as used in an embodiment, means, but is not limited to, a software or hardware component, such as a field programmable gate array (FPGA) or application specific integrated circuit (ASIC), which performs certain tasks. However, a unit does not mean that it is limited to software or hardware. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units. In addition, components and units may be implemented to reproduce one or more central processing units (CPUs) in a device or a security multimedia card.

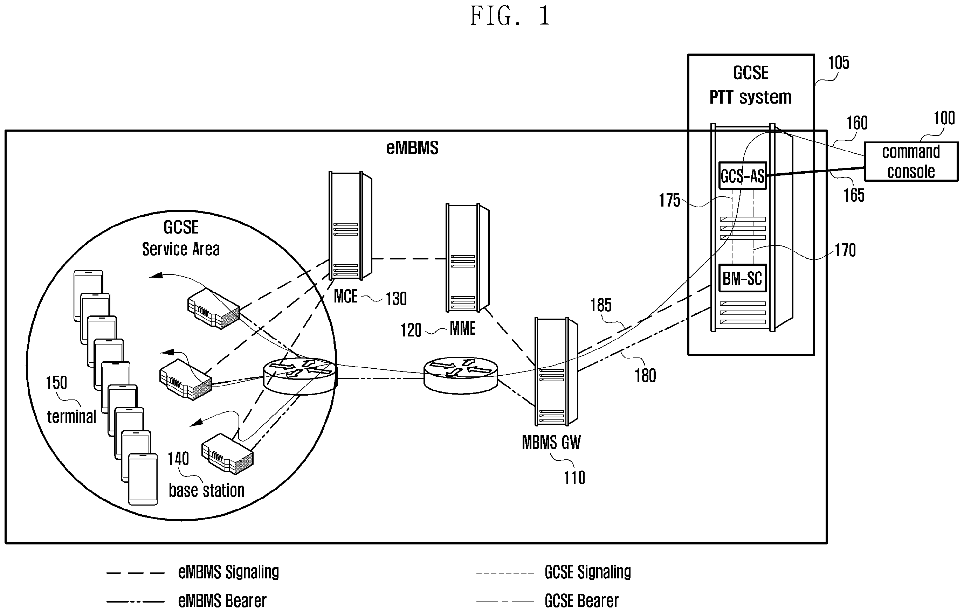

FIG. 1 is a diagram explaining group communication using an evolved multi broadcast/multicast system (eMBMS) in a public safety - long term evolution (PS-LTE) system according to an embodiment of the present disclosure.

Referring to FIG. 1, the term "PS-LTE" was first used in a public safety communications research (PSCR) in the United States, and is an LTE system that aims at transmitting data for public safety to a plurality of terminals (user equipment (UE)) using the eMBMS. A push to talk (PTT) service means that the PS-LTE system transfers instructions for the public safety to the plurality of terminals using broadcasts. The present disclosure may be used for the PS-LTE.

In an eMBMS system, an area in which the same group communication can be provided is defined as a multicast broadcast single frequency network (MBSFN) area. The SFN area is defined in the standards as a set of cells that support configuration in the same physical (PHY) layer/media access control (MAC) layer / network. A terminal that receives an eMBMS service of LTE communication permits reception of a broadcast channel that is broadcasted to unspecified terminals, unlike the existing method for a MAC layer to provide scheduling of a physical downlink control channel (PDCCH) channel for each terminal, and a base station (evolved node B (eNB)) schedules a packet in a multicast channel scheduling period (MSP) of the broadcast channel in the MAC layer.

A PS-LTE system using the eMBMS in FIG. 1 may include a group communication service enabler (GCSE) 105, an MBMS gateway (MBMS-GW) 110, a mobility management entity (MME) 120, a multi-cell/multicast coordination entity (MCE) 130, a base station 140, and a terminal 150. The MBSFN area in the eMBMS system corresponds to a GCSE service area of FIG. 1.

The GCSE 105 may include the PTT system. Further, the GCSE 105 may include a group communication service application server (GCS-AS) and a broadcast multicast - service center (BM-SC). In the following description, a command console 100 of the public safety network transfers a message for the public safety to at least one terminal (160). First, the command console 100 transfers a message to a GCS-AS of a GCSE 105. Thereafter, the GCS-AS transmits GCSE signaling (175) through a GCSE bearer 170 connected to the GCS-AS and the BM-SC. The BM-SC that has received the GCSE signal generates an eMBMS signal (185) based on the GCSE signaling, and then the BS-SC transmits the eMBMS signal through an eMBMS bearer 180 connected to the MBMS GW 110. The eMBMS signal is transmitted to the base station 140 that is located in a GCSE service area through the MME 120 and the MCE 130. In accordance with the above-described communication method in the eMBMS system, the base station 140 may transmit the same eMBMS signal to at least one terminal 150 that is located in the GCSE service area.

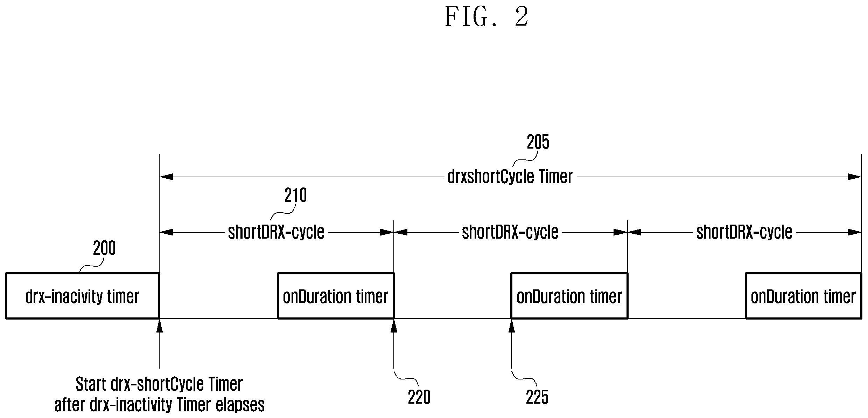

FIG. 2 is a diagram explaining a discontinuous reception (DRX) operation of a unicast terminal in an LTE system.

Referring to FIG. 2, in an LTE system, a packet data traffic pattern generally occurs in a manner that a lot of transmission action occurs for a predetermined time and then no transmission occurs for a long time. In consideration of this, a terminal monitors a PDCCH for only one sub-frame in the predetermined DRX cycle, and enters into a sleep state through turn-off of a reception circuit for the remaining sub-frames.

In the case of driving a drx-inactivity timer 200, the terminal confirms whether the sub-frame is a sub-frame in which data is received while monitoring the PDCCH for each sub-frame. If the data is not received in the sub-frame and a predetermined drx-inactivity time elapses, the terminal starts a drx-shortcycle timer 205. In the cycle of the drx-shortcycle timer 205, the terminal monitors the PDCCH through turn-on of the reception circuit only in an onDuration timer 220 in a predetermined shortDRX-cycle 210. If the onDuration timer ends, the terminal turns off the reception circuit again to enter into the sleep state 220, and then if the onDuration timer starts in the next shortDRX-cycle 225, the terminal turns on the reception circuit to monitor the PDCCH. Through the above-described DRX operation, the terminal can remarkably reduce power consumption of the reception circuit.

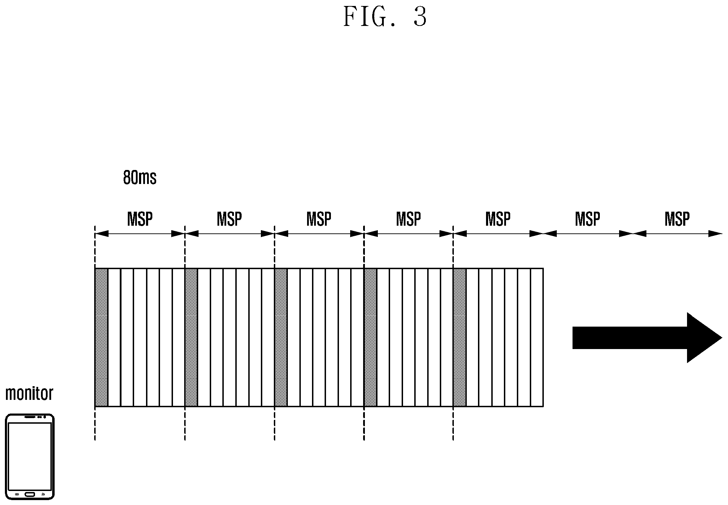

FIG. 3 is a diagram explaining how a terminal performs monitoring of channel scheduling information in accordance with 80 ms periodic continuous reception operation using an eMBMS.

Referring to FIG. 3, FIG. 3 shows that the terminal monitors MCH scheduling information (MSI) for each MCH scheduling period (MSP). For example, in the case of receiving an eMBMS service in a public safety network, the terminal can continuously monitor the MSI in the MSP period of 40 ms (in case of PS-LTE) at minimum or 80 ms (in case of normal LTE).

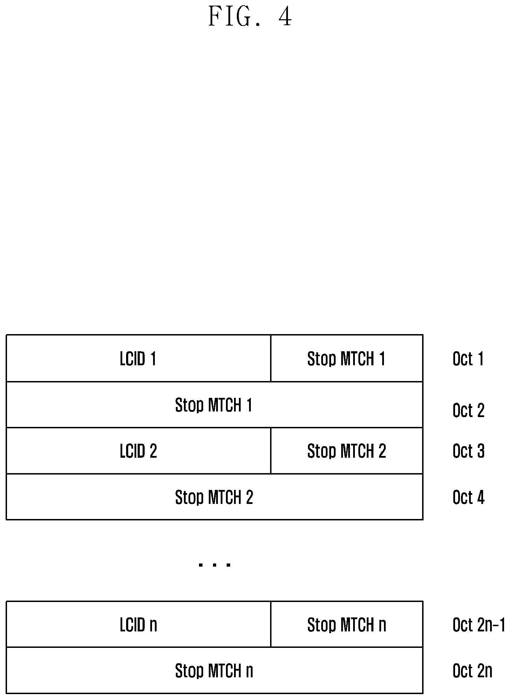

FIG. 4 is a diagram explaining the structure of MSI according to an embodiment.

Referring to FIG. 4, FIG. 4 illustrates the structure of an MSI that is a MAC protocol data unit (MAC PDU) in FIG. 3.

Using the MSI, the terminal can determine existence/nonexistence of transmitted data for a specific GCSE group to which the terminal belongs or a mission critical push to talk (MCPTT) group.

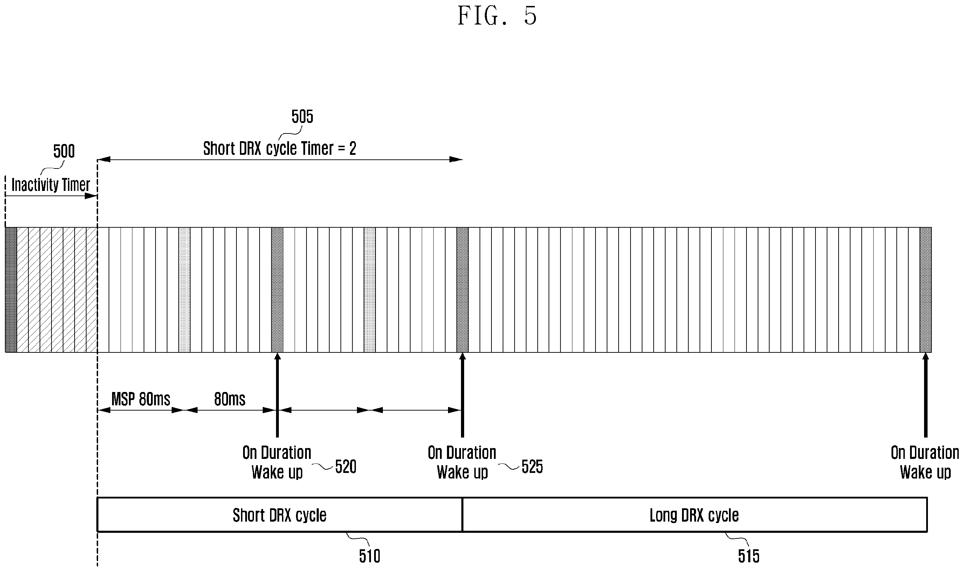

FIG. 5 is a diagram explaining data reception using a DRX operation in the case where a terminal uses an eMBMS according to an embodiment of the present disclosure.

Referring to FIG. 5, FIG. 5 illustrates that the terminal receives data using the DRX operation in the case where the terminal uses an eMBMS.

The terminal that performs a DRX operation according to a predetermined timer receives data through monitoring of the MSI. The above-described timer includes an inactivity timer and a short DRX cycle timer.

In the present disclosure, in accordance with the setting of the timer for DRX of the terminal, two methods will be described as follows.

First method, which does not form part of the claimed invention: a method in which the terminal sets the timer for itself.

Second method: a method in which the timer of the terminal is set using a timer-related parameter generated in a network (e.g., MCE).

The two methods as described above have the same DRX operation of the terminal, but in the case of the second method, a base station operation and a network operation are added thereto. The operation of the terminal that is commonly applied to the first method and the second method will be described, and then the second method that is different from the first method will be described with respect to FIG. 5.

In the case where a timer for DRX is set to the terminal, the terminal observes a MAC control element of the MSI that is transmitted at the foremost portion of the MSP as described above with reference to FIG. 3 in the DRX cycle. The terminal turns off the reception circuit to enter into a sleep state with respect to the remaining MSIs that are repeatedly transmitted in the MSP period. Through this, power consumption can be remarkably reduced.

In the case of MCPPT having the features that little or very small traffic is irregularly transmitted in a long-term transmission cycle, like voice over internet protocol (VoIP), a function of transiting to a long DRX through a short DRX is selectively used. In this case, the power consumption becomes smaller as the DRX cycle becomes longer, and thus the short DRX and the long DRX can be simultaneously supported.

The terminal is switched to the DRX mode in accordance with the value of the inactivity timer 500. Before being switched to the DRX mode, the terminal monitors the MSI for each MSP period. The inactivity timer indicates the number of times that data that is transmitted for a specific session does not exist in the MSI that is monitored for each MSP period by the terminal. If the number of times that no data exists is equal to or larger than a predetermined number of times, the terminal is transitioned to the DRX mode for each MSP period. The terminal is transitioned to the DRX mode through driving of the short DRX cycle timer 505.

The short DRX is a function that is selectively applied in comparison to the long DRX. The short DRX corresponds to a method for the terminal to monitor the MSI through an even number multiple of the existing MSP before being transitioned to a relatively long DRX (e.g., 320 ms) to minimize a loss of data packets due to the long DRX. The terminal operates in the short DRX and long DRX cycles as in the following Equation 1.

$$\text{Short DRX} = \text{SFN Modulo MSP Period} * \text{Short Duration Timer} = 0$$

$$\text{SFN} = \text{system frame number} \qquad \qquad ...\text{Equation 1}$$

The terminal monitors the MSI value of the SFN only in the case where the modulo operation value for a multiple of the SFN, the MSP period, and the short duration timer value becomes "0".

An example of FIG. 5 will be described as follows. It is assumed that the MSP is 80 ms and the value of the short duration timer is "2". In this case, the terminal turns on the reception circuit in the reception cycle of 160 ms as expressed in the Equation 1 (520 and 525). The terminal can monitor the MSI value of the MSP in the frame in which the reception circuit is turned on. Further, if it is assumed that the predetermined short DRX cycle timer value is "2", the terminal can be transitioned to the long DRX cycle in the case where data is not transmitted to the MSI value in two times reception cycle (on duration wakeup). The operation in the long DRX cycle is determined as in Equation 2.

After the terminal is transitioned from the short DRX cycle 510 to the long DRX cycle 515, the reception cycle (on duration wakeup) in the long DRX is determined as in Equation 2.

$$\text{Long DRX} = \text{SFN Modulo MSP Period} *$$

$$\text{Long Duration Timer} = 0 \quad ...\text{Equation 2}$$

Here, the long duration timer value may be set as a relatively large even number multiple. An example of FIG. 5 will be described as follows. If the MSP is 80 ms and the long duration timer value is "4", the terminal turns on the reception circuit for the reception cycle (on duration wakeup) of 320 ms. The terminal may monitor the MSI value of the MSP in the frame in which the reception circuit is turned on. If transmitted data exists in the MSI in the predetermined reception cycle (on duration wakeup), the terminal is transitioned from the DRX mode to the normal mode to newly re-determine the inactivity timer.

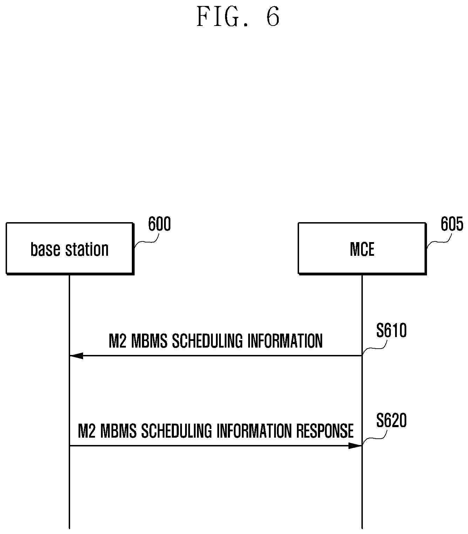

FIG. 6 is a diagram explaining signals transmitted and received between a base station and an MCE.

Referring to FIG. 6, FIG. 6 explains a second method for the terminal to set a timer using a timer-related parameter that is generated in the above-described network (e.g., MCE). The second method includes the same terminal DRX operation as the terminal operation of the first method, but a base station operation and a network operation are added thereto. In the second method, the base station operates in short DRX and long DRX modes that are synchronized with all terminals that receive the eMBMS session in the same MBSFN area.

The base station predicts the reception cycle (on duration wakeup) of the short DRX that is set to the terminal in the same MBSFN area and the reception cycle (on duration wakeup) of the long DRX, temporarily stores data to be transmitted to the MSP in a buffer without being discarded so that the terminal can receive the data later, and then transmits the stored packet to the next transmittable MSP.

As described above, according to the second method for the terminal to set a timer using the timer-related parameter that is generated in the network (e.g., MCE), the MCE 605 transmits an M2 MBMS scheduling information message to the base station 600 in operation S610. The base station 600 transmits an M2 MBMS scheduling information response message in response to this in operation S620.

The MBMS scheduling information message that is received by the base station 600 includes parameter values that are required for the DRX operation. The MCE transmits a parameter that is newly added to the M2 MBMS scheduling information message to the base station. The necessary message parameters are indicated as in Table 1.

[Table 1]

| IE/Group Name | Presence | Range | IE type and refer ence | Semantics description |
|---|---|---|---|---|
| DRX Inactivity Timer | O | | ENUMERATED {n1, n2, n3, n4, n5, n6, n7, n8} | Encoded as the drx-InactivityTimer-r13 IE in T5 36.331 [11]. |
| Short duration timer | O | | ENUMERATED {n2, n4, n8} | Encoded as the short-duration-timer-r13 IE in TS 36.331 [11]. |
| Long duration timer | O | | ENUMERATED {n16, n32, n64}, | Encoded as the long-duration-timer-r13 IE in TS 36.331 [11]. |
| Short DRX Cycle Timer | O | | ENUMERATED {n2, n4, n8, n16, n32} | Encoded as the short-drx-cycle-timer-r13 |

- DRX Inactive Timer: indicates the number of MSI counts in which data is not transmitted and which becomes a reference when the terminal is transitioned from the existing normal operation to the short DRX. For example, the number may be an integer of {n1, n2, n3, n4, n5, n6, n7, n8}.
- Short DRX Cycle Timer: indicates the number of reception cycle (on duration wakeup) counts in which data is not transmitted and which becomes a reference when the terminal is transitioned from the short DRX to the long DRX. For example, the number may be an integer of {n2, n4, n8, n16}.
- Short Duration timer: indicates a value that determines the reception cycle (on duration wakeup) in the short DRX cycle of the terminal, and is used as a multiple value of the MSP in the form of the doubled MSP. For example, the value may be an integer of {n2, n4, n8}.
- Long Duration timer: indicates a value that determines the reception cycle (on duration wakeup) in the long DRX cycle of the terminal, and is used as a multiple value of the MSP in the form of the doubled MSP. For example, the value may be an integer of {n16, n32, n64}.

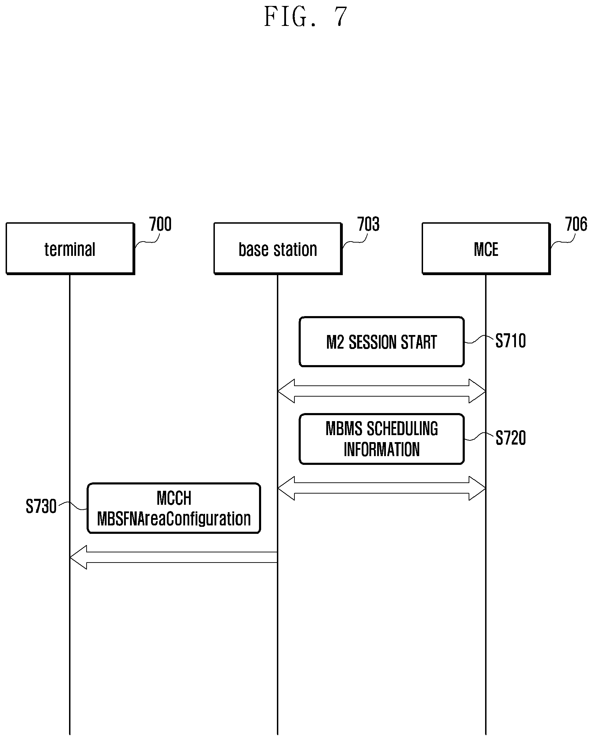

FIG. 7 is a diagram explaining the whole call process in which a session of eMBMS between a terminal, a base station, and an MCE starts according to an embodiment of the present disclosure.

Referring to FIG. 7, whole call process is explained in which a session of an eMBMS starts (i.e., the procedure of transferring DRX-related parameters to the terminal).

At operation S710, an MCE 706 notifies a base station 703 of the start of an eMBMS session through an M2 session start message. Thereafter, at operation S720, the MCE transfers information on allocation of wireless resources to the session in the same MBSFN area and parameter values required for short DRX and long DRX operations to the base station through an M2 MBMS scheduling information message.

Thereafter, at operation S730, the base station adds the parameter value included in the M2 scheduling information message received at operation S730 and the DRX indicator value indicating whether the DRX mode is currently applied to a radio resource control (RRC) multicast-broadcast single frequency network (MBSFN) AreaConfiguration message of a multicast control channel (MCCH), and broadcasts the message to the terminals 700 that receive the MCCH control channel in the MBSFN area.

The parameters added to the MBSFN area configuration (AreaConfiguration) message of the MCCH channel in relation to the DRX are as shown in Table 2 below. The explanation of newly defined parameters and their values are as follows.

[Table 2]

```
drx-config-r13 SEQUENCE {
        drx-InactivityTimer -r13 ENUMERATED {n1, n2, n3, n4, n5, n6, n8, n10,
  n20, n30, spare5, spare4, spare3, spare2, spare 1},
        short-duration-timer-r13 ENUMERATED {n2, n4, n8},
        long-duration-timer-r13 ENUMERATED {n16, n32, n64},
        short-drx-cycle-timer-r13 ENUMERATED {n2, n4, n8, n16, n32}
        DRX-Indicator-r13 BOOLEAN
          },
```

- dRX-Inactivity Timer-r13: indicates the number of MSI counts in which data is not transmitted and which becomes a reference when the terminal is transitioned from the existing normal operation to the short DRX. For example, the number may be an integer of {n1, n2, n3, n4, n5, n6, n7, n8}.
- Short-Drx-Cycle-Timer-r13: indicates the number of reception cycle (on duration wakeup) counts in which data is not transmitted and which becomes a reference when the terminal is transitioned from the short DRX to the long DRX. For example, the number may be an integer of {n2, n4, n8, n16}.
- Short-Duration-timer-r13: indicates a value that determines the reception cycle (on duration wakeup) in the short DRX cycle of the terminal, and is used as a multiple value of the MSP in the form of the doubled MSP. For example, the value may be an integer of {n2, n4, n8}.
- Long-Duration-timer-r13: indicates a value that determines the reception cycle (on duration wakeup) in the long DRX cycle of the terminal, and is used as a multiple value of the MSP in the form of the doubled MSP. For example, the value may be an integer of {n16, n32, n64}.
- DRX-Indicator-r13: an indicator that notifies the terminal whether the DRX mode is currently proceeding. For example, it may indicate "ON" or "OFF" by "0" or "1".

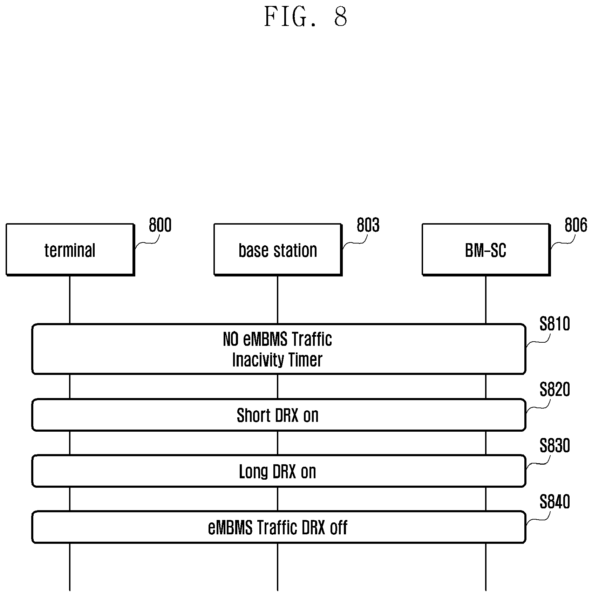

FIG. 8 is a diagram explaining a call process using DRX operation of an eMBMS between a terminal, a base station, and a BM-SC 806 according to an embodiment of the present disclosure.

Referring to FIG. 8, as described above with reference to FIG. 7, the terminal acquires set values of drx-InactivityTimer-r13, short-drx-cycle-timer-r13, short-duration-timer-r13, short-duration-timer-r13, and DRX-Indicator-r13, which are parameters required for the DRX mode operation through decoding the drx-config-r13 message that is transmitted from an MCCH channel to a base station 803.

At operation S810, a terminal 800 confirms the value of the MCCH message, and is then transitioned to the long DRX in the case where the DRX-Indicator-r13 is in an on state. However, in the case where the DRX-Indicator-r13 is in an off state, the terminal 800 operates a drx-Inactivity Timer-r13 timer and monitor the MSI value in an MSP period. In this case, if there is not data transmission in the MSI as many as the number of times set in the drx-Inactivity Timer-r13, the Inactivity timer expires, and the terminal 800 is transitioned to the short DRX state.

At operation S820, the terminal wakes up in a determined reception cycle (short DRX on duration wakeup) while operating in a short DRX mode, and monitors an MSI MAC control element that is transmitted at the foremost portion of the MSP. In the remaining MSIs that are repeatedly transmitted in the MSP period, the terminal turns off the reception circuit to be in a sleep state.

As described above, if there is not data transmission in the MSI as many as the number of times set in the short-drx-cycle-timer-r13 while the terminal operates in the short DRX mode, the terminal is transitioned to a long DRX mode. At operation S830, in the long DRX mode, the terminal wakes up in a determined reception cycle (long DRX on duration wakeup), and may monitor an MSI MAC control element that is transmitted at the foremost portion of the MSP. In the remaining MSIs that are repeatedly transmitted in the MSP period, the terminal turns off the reception circuit to be in a sleep state.

As described above, the terminal wakes up in a determined cycle of the long DRX to monitor the MSI value of the MSP, and if there exists received data, the terminal is transitioned from the long DRX mode to a normal reception mode to receive eMBMS data, and then may operate the drx-Inactivity Timer-r13 timer again. Thereafter, the terminal may return to operation S810 to repeat the above-described operations.

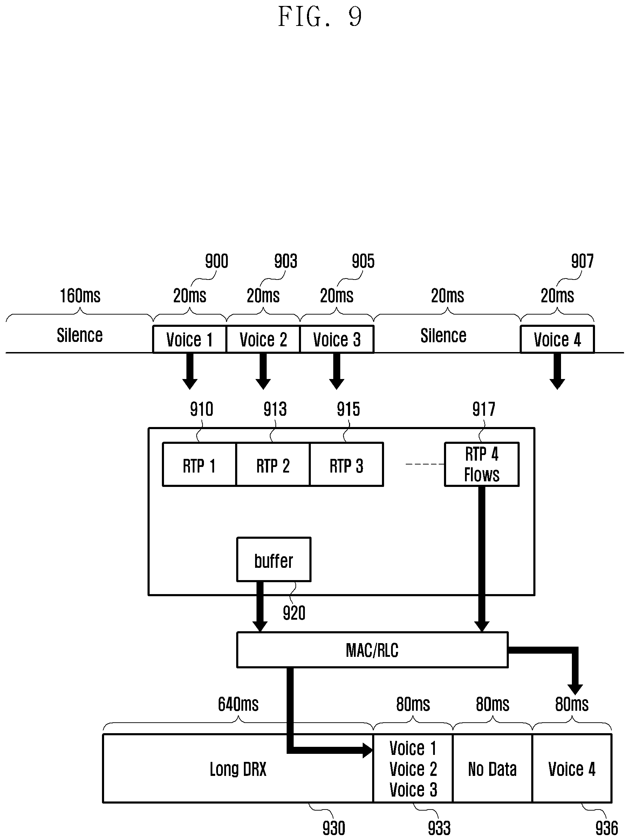

FIG. 9 is a diagram explaining how a base station supports DRX operation according to an embodiment of the present disclosure.

Referring to FIG. 9, FIG. 9 explains how a base station transmits stored voice packets to match the reception cycle (On Duration wakeup) of the DRX according to the DRX operation of the terminal.

In the case where the base station intends to transmit voice 1 900, voice 2 903, and voice 3 905 in the long DRX mode 930 of the terminal, the base station temporarily stores RTP 1 910, RTP 2 913, and RTP 3 915 for voice 1, voice 2, and voice 3 in a buffer 920 for the reception cycle (On duration wakeup) of the long DRX of the terminal. If the base station transmits voice 1, voice 2, and voice 3 at a time of the reception cycle (On duration wakeup) of the long DRX 930 of the terminal, the terminal can receive the voice 1, voice 2, and voice 3 through confirming of the MSI (933). Thereafter, the terminal that has received the data is transitioned to a normal reception mode, and the base station can immediately transmit voice packets to the MSP without temporarily storing the voice packets in the buffer. The base station can immediately transmit RTP 4 917 for voice 4 907 to be transmitted, and the terminal can receive the voice 4 907 through confirming of the MSI value for each MSP (936).

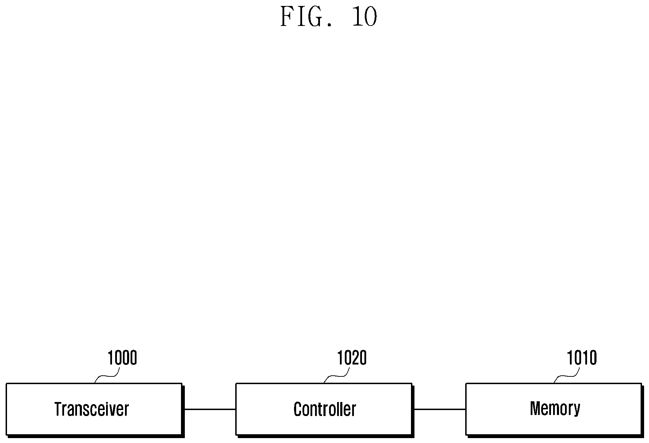

FIG. 10 is a block diagram illustrating the internal configuration of a base station according to an embodiment of the present disclosure.

Referring to FIG. 10, the base station may include a transceiver 1000, a memory 1010, and a controller (e.g., processor) 1020.

The transceiver 1000 is configured to transmit or receive information required for the operation of the base station. The transceiver 1000 receives an M2 MBMS scheduling information message from the MCE. Further, the transceiver 1000 receives information related to the DRX cycle that is included in the M2 MBMS scheduling information message. The information related to the DRX cycle includes drx-Inactivity Timer-r13, short-drx-cycle-timer-r13, short-duration-timer-r13, and short-duration-timer-r 13.

The transceiver 1000 receives an MBSFNAreaConfiguration message from the terminal. The MBSFNArea-Configuration message includes DRX-Indicator-r1 as information related to the received DRX cycle.

The memory 1010 may store information required for the operation of the base station. The memory 1010 may store information related to the DRX cycle that is received from the MCE.

The controller 1020 operates to receive a first message that includes information related to a DRX cycle from a network device, to transmit a second message based on the first message to at least one terminal, and to transmit data to the at least one terminal based on the information related to the DRX cycle. The information related to the DRX cycle includes a DRX inactivity timer, a first period timer, a second period timer, and a first period DRX cycle timer, and the reference time of the second period timer is longer than the reference time of the first period timer.

The controller operates to determine whether a time for transmitting first data is a reception cycle of the terminal based on the information related to the DRX cycle, to store the first data in a buffer in the case of a first time that is not the reception cycle of the terminal, and to transmit the first data stored in the buffer and second data to be transmitted at the second time to the terminal at a second time that is the reception cycle of the terminal that comes after the at least one first time. The first message includes an MBMS MSI message, and the second message includes a MBSFNAreaConfiguration message.

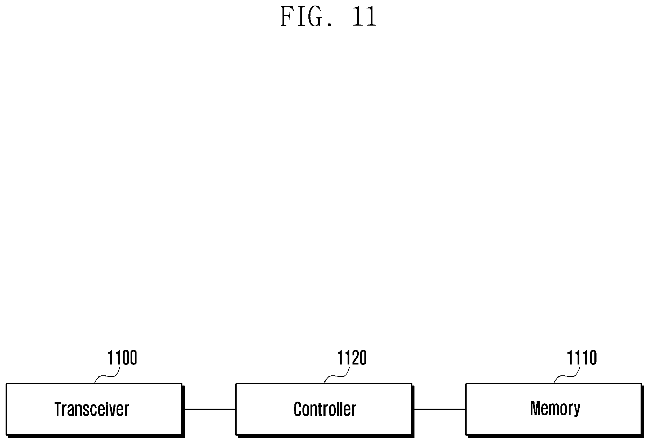

FIG. 11 is a block diagram illustrating the internal configuration of an MCE according to an embodiment of the present disclosure.

Referring to FIG. 11, the MCE may include a transceiver 1100, a memory 1110, and a controller 1120. Further, the MCE may be interchangeably used with the term "network device".

The transceiver 1100 may transmit or receive information required for the operation of the MCE. The transceiver 1100 transmits an M2 MBMS scheduling information message that includes information for DRX of the data to the base station. Further, the transceiver 1100 transmits information related to the DRX cycle that is included in the M2 MBMS scheduling information message. The information related to the DRX cycle includes drx-Inactivity Timer-r13, short-drx-cycle-timer-r13, short-duration-timer-r13, and short-duration-timer-r13.

The memory 1110 may store information required for the operation of the MCE. The memory 1110 may store information related to the DRX cycle that is received from the MCE.

The controller 1120 operates to transmit a first message that includes information related to the DRX cycle to the base station. The information related to the DRX cycle is used for the base station to broadcast data to the terminal. The first message includes an MBMS SI message.

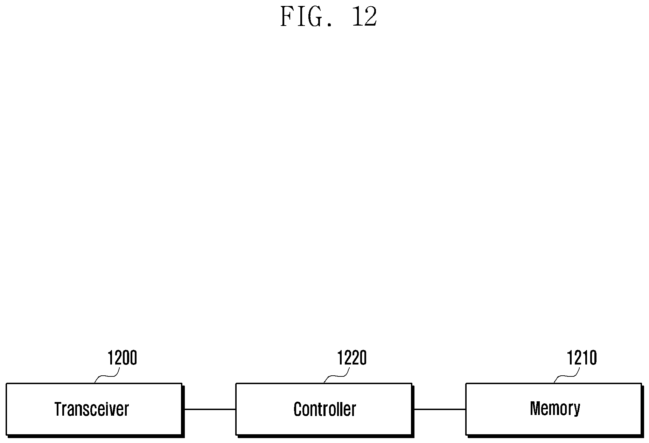

FIG. 12 is a block diagram illustrating the internal configuration of a terminal according to an embodiment of the present disclosure.

Referring to FIG. 12, the terminal may include a transceiver 1200, a memory 1210, and a controller 1220.

The transceiver 1200 receives an MBSFNAreaConfiguration message for DRX related configuration from the base station. The MBSFNAreaConfiguration message includes DRX-Indicator-r1 r1 as information related to the DRX cycle that is received by the base station.

The memory 1210 may store information required for the operation of the MCE. The memory 1210 may store information included in the MBSFNAreaConfiguration message. The memory 1210 may transmit the stored information to the controller 1220 to be used when the terminal performs DRX operation in the eMBMS.

The controller 1220 operates to receive a first message that includes information related to the DRX cycle from the base station and to discontinuously receive data from the base station based on the information related to the DRX cycle. The information related to the DRX cycle includes a DRX inactivity timer, a first period timer, a second period timer, a first period DRX cycle timer, and a DRX cycle indicator. The DRX cycle indicator indicates whether to proceed with the DRX cycle of the terminal at a time when the second message is received, and the reference time of the second period timer is longer than the reference time of the first period timer.

The controller 1220 operates the DRX inactivity timer if the DRX cycle indicator indicates that the DRX cycle of the terminal does not proceed, and may operate the second period timer if the DRX cycle indicator indicates that the DRX cycle of the terminal proceeds.

The controller 1220 operates to monitor scheduling information that is included in a second message based on the operating timer, and to receive the data from the base station based on the scheduling information.

Although preferred embodiments of the present disclosure have been described in the specification and drawings and specific wordings have been used, these are merely used as general meanings to assist those of ordinary skill in the art to gain a comprehensive understanding of the present disclosure, and do not limit the scope of the present disclosure. It will be apparent to those of ordinary skill in the art to which the present disclosure pertains that various modifications are possible on the basis of the technical concept of the present disclosure in addition to the embodiments disclosed herein.

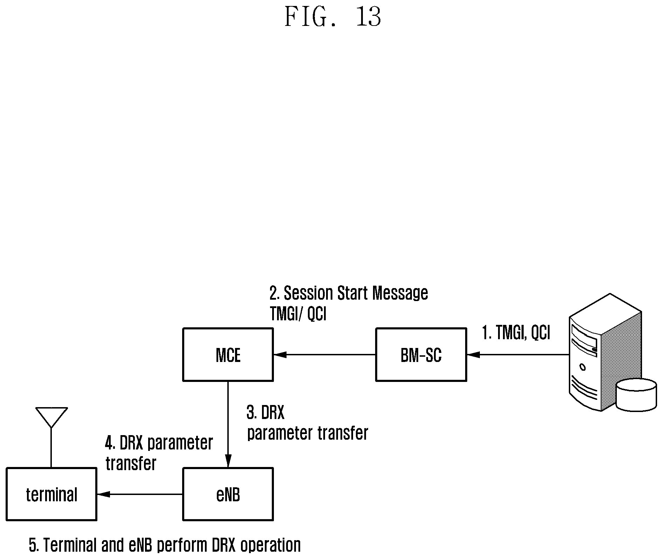

FIG. 13 is a diagram explaining a procedure in which a DRX parameter, being limited to a public safety network call, is transferred from an MCE to an eNB as a session of an eMBMS between a terminal, a base station, and an MCE starts according to an example not forming part of the claimed invention. More specifically, the BM-SC can be set to the MCE using a quality of service class identifier (QCI) number whereby a call, to which the DRX should be applied in a public safety network, is defined in the standards. More specifically, the MCE transfers DRX parameter value to the eNB with respect to an eMBMS call that is set by QCI 65 and 66.

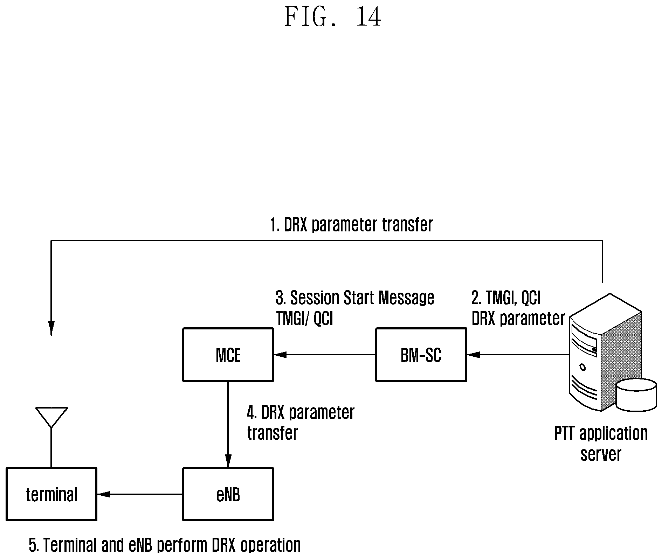

FIG. 14 is a diagram explaining a procedure in which a PTT server generates and transfers a DRX parameter, being limited to a public safety network call, to a terminal and an eNB as a session of an eMBMS between a terminal, a base station, and an MCE starts according to an example not forming part of the claimed invention.

Referring to FIG. 14, not forming part of the claimed invention, the PTT server transfers a DRX parameter to the terminal through an application message with respect to an eMBMS call that is set by QCI 65 and 66. The PTT application server transfers the DRX parameter value to the terminal using the SDP during generation of PTT session with the UE. More specifically, the PTT application server performs the following operations.

1. The PTT application server transfers the DRX parameter value to the terminal using the SDP during generation of the PTT session with the UE.
2. The PTT application server transfers the QCI value 65 or 66 for each service and other parameter values except for the session identifier temporary mobile group identity (TMGI) to the BM-SC.
3. The BM-SC transfers the QCI value 65 or 66 for each service and other parameter values except for the session identifier TMGI to the BM-SC.
4. The MCE determines whether to apply the DRX mode to the TMGI through confirming of the QCI value, and transfers the DRX parameter to the eNB.
5. The terminal and the eNB operate with DRX parameter values set through the above-described operations 1, 2, 3, and 4.

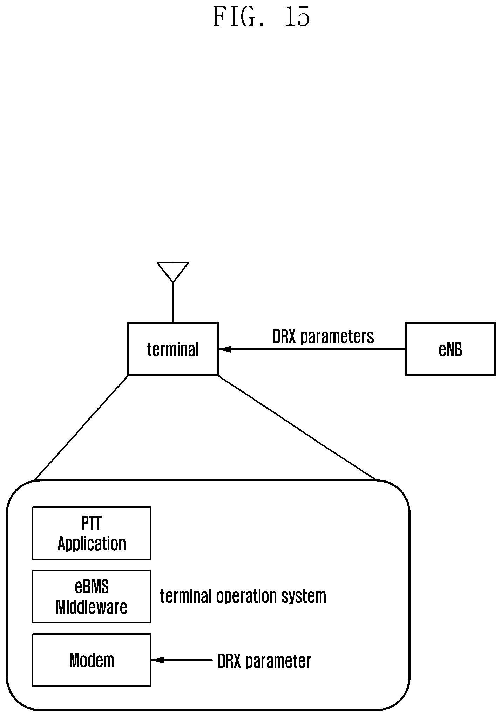

FIG. 15 is a block diagram illustrating the internal configuration of a terminal through which a modem receives a DRX parameter as an LTE message according to an example not forming part of the claimed invention.

Referring to FIG. 15, the DRX parameter that is transmitted from the eNB to the MCCH message is transferred to the modem of the terminal and the modem performs the DRX operation.

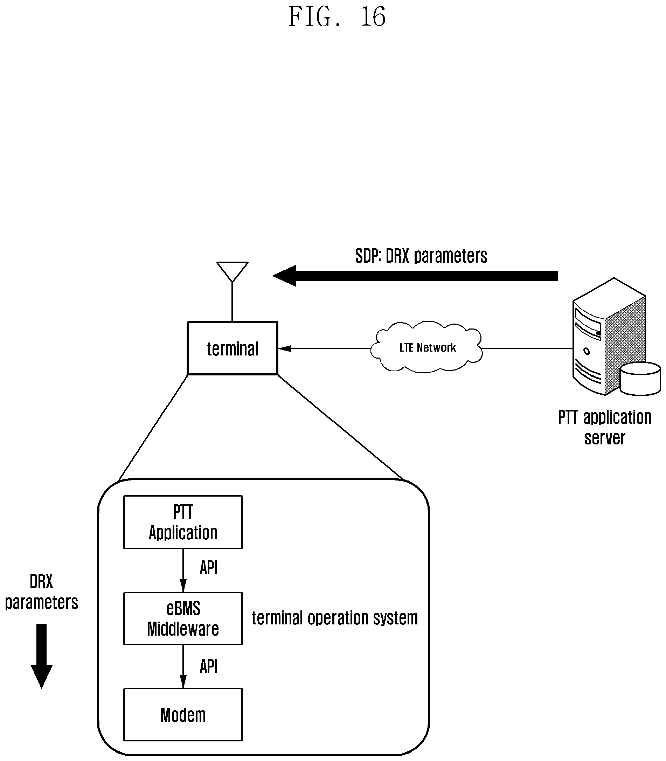

FIG. 16 is a block diagram illustrating the internal configuration of a terminal through which a PTT application of the terminal receives a DRX parameter as an upper application message and a modem under eMBMS middleware receives the DRX parameter according to an example not forming part of the claimed invention.

Referring to FIG. 16, the PTT application of the terminal receives the DRX parameter in the form of an SDP parameter, generates the DRX parameter value through a parsing work, and transfers the generated DRX parameter value to the modem of the terminal using the application program interface (API) of eMBMS middleware. The DRX parameter is transferred to the modem, and the modem performs the DRX operation.

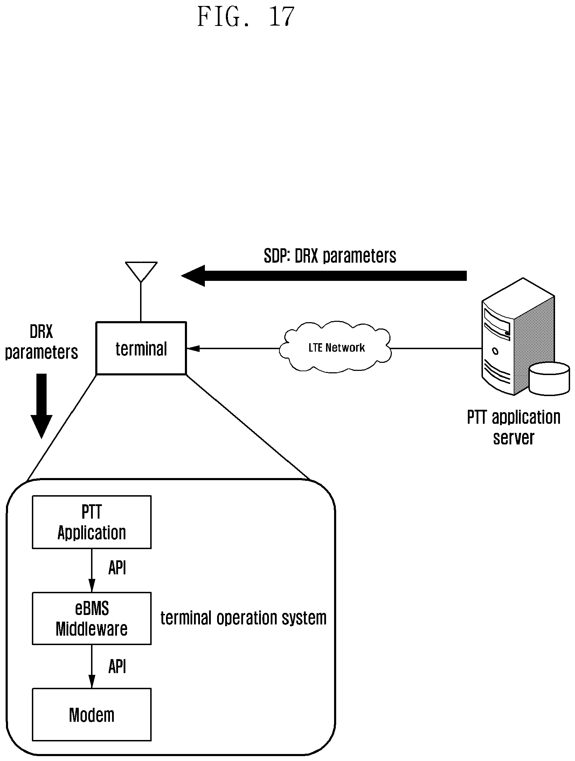

FIG. 17 is a block diagram illustrating the internal configuration of a terminal through which a PTT application of the terminal receives a DRX parameter as an upper application message and the application operates as a DRX according to an example not forming part of the claimed invention.

Referring to FIG. 17, the PTT application of the terminal receives the DRX parameter in the form of an SDP parameter, and generates the DRX parameter value by parsing the SDP parameter. The application performs DRX operation using the generated DRX parameter value. The application performs DRX determination through determining of existence/nonexistence of the received TPP packet.

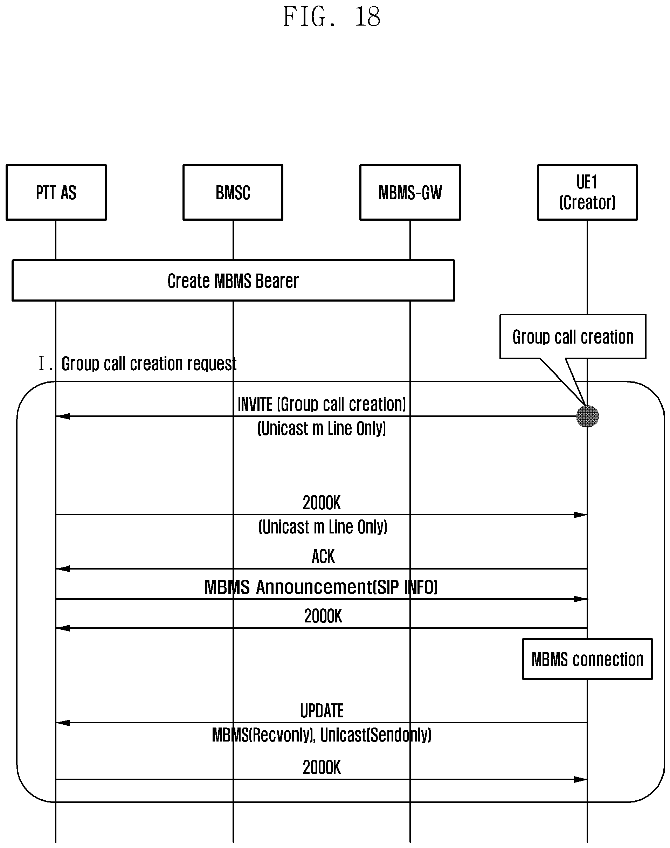

FIG. 18 is a diagram explaining a procedure in which a PTT server generates and transfers a DRX parameter, being limited to a public safety network call, to a terminal in the form of an SDP of a session initiation protocol (SIP) as a session of an eMBMS between a terminal, a base station, and an MCE starts according to an example not forming part of the claimed invention.

Referring to FIG. 18, the DRX parameter is transferred to the PTT application of the terminal in the form of an MBMS Announcement (SIP INFO) message. The SIP info message that is required for transfer of the DRX parameter is as follows.

> **a = drx-InactivityTimer -r13: n1, n2, n3, n4, n5, n6, n7, n8**
> **a= short-duration-timer-r13: n2, n4, n8**
> **a= long-duration-timer-r13: n16, n32, n64**
> **a= short-drx-cycle-timer-r13: n2, n4, n8, n16, n32**

**Claims**

1. A method performed by a base station (140) in a mobile communication system, the method comprising:

receiving (S710), from a multi-cell/multicast coordination entity, MCE, (130), an M2 session start request message for starting a multicast broadcast multicast service, MBMS, session;
receiving (S720), from the MCE, an M2 MBMS scheduling information message including information on allocation of resources to the MBMS session in a multicast-broadcast single frequency network, MBSFN, area and discontinuous reception, DRX, parameter values, the DRX parameter values including a DRX inactivity timer, a short duration timer, a long duration timer, and a short DRX cycle timer for an MBMS;
transmitting (S730), to a plurality of terminals (150), a radio resource control, RRC, MBSFN area configuration message of a multicast control channel, MCCH, the RRC MBSFN area configuration message including the DRX parameter values included in the M2 MBMS scheduling information message and a DRX indicator value indicating whether a DRX mode is applied;
wherein the DRX inactivity timer indicates a number of multicast scheduling information, MSI, counts in which data is not transmitted and which becomes a reference when a terminal of the plurality of terminals is transitioned from normal operation to a short DRX mode;
the short DRX cycle timer indicates a number of reception cycle counts in which data is not transmitted, and becomes a reference when the terminal of the plurality of terminals is transitioned from the short DRX mode to a long DRX mode;
the short duration timer indicates a value that determines the reception cycle in the short DRX cycle of the terminal;
the long duration timer indicates a value that determines the reception cycle in the long DRX cycle of the terminal;
identifying whether a time for transmitting first data is a reception cycle of the terminals (150) based on the DRX parameter values and the DRX indicator value;
storing the first data in a buffer in case of a first time is not a reception cycle of the terminals; and
transmitting, to the plurality of terminals, the first data and second data to be transmitted at a second time to the terminal at the second time that is the reception cycle of the terminal that comes after the at least one first time.

2. The method of claim 1, wherein the first and second data include voice packets.

3. A method performed by a terminal (150, 700) in a mobile communication system, the method comprising:

receiving, from a base station (140, 703), a radio resource, RRC, multicast broadcast single frequency network, MBSFN, area configuration message of a multicast control channel, MCCH, the RRC MBSFN area configuration message including discontinuous reception, DRX, parameter values for reception of packets associated with a multicast broadcast multicast service, MBMS, and a DRX indicator value indicating whether a DRX mode is applied, the DRX parameter values including a DRX inactivity timer, a short duration timer, a long duration timer, and a short DRX cycle timer for the MBMS;
wherein the DRX inactivity timer indicates a number of multicast scheduling information, MSI, counts in which data is not transmitted and which becomes a reference when the terminal s is transitioned from normal operation to a short DRX mode;
the short DRX cycle timer indicates a number of reception cycle counts in which data is not transmitted, and becomes a reference when the terminal is transitioned from the short DRX mode to a long DRX mode;
the short duration timer indicates a value that determines the reception cycle in the short DRX cycle of the terminal;
the long duration timer indicates a value that determines the reception cycle in the long DRX cycle of the terminal;
identifying the DRX parameter values; and
operating the DRX inactivity timer if the DRX indicator value indicates that a DRX cycle of the terminal does not

proceed and operating the long duration timer if the DRX indicator value indicates that the DRX cycle of the terminal proceeds;
wherein, when operating the DRX inactivity timer, monitoring multicast scheduling information, MSI, in a multicast channel scheduling period, MSP, and if there is no data transmission in the MSI as many as the number of times set in the DRX inactivity timer, the inactivity timer expires and the terminal transitions to the short DRX state;
while operating in the short DRX mode, waking up in the determined reception cycle and monitoring an MSI MAC control element in a foremost portion of the MSP, and if there is no data transmission in the MSI as many as the number of times set in the short duration timer, transitioning to the long DRX mode;
while operating in the long DRX mode, waking up in the determined reception cycle and monitoring an MSI MAC control element in a foremost portion of the MSP, and
receiving, from the base station, data based on the scheduling information and transitioning from either the short or the long DRX mode to a normal reception mode if data is received.

**4.** Abase station (140, 703) in a mobile communication system, the base station comprising:

a transceiver; and
a controller coupled with the transceiver and configured to:

receive, from a multi-cell/multicast coordination entity, MCE, (130, 706) an M2 session start request message for starting a multicast broadcast multicast service, MBMS session,
receive, from the MCE, an M2 MBMS scheduling information message including information on allocation of resources to the MBMS session in a multicast-broadcast single frequency network, MBSFN, area and discontinuous reception, DRX, parameter values, the DRX parameter values including a DRX inactivity timer, a short duration timer, a long duration timer, and a short DRX cycle timer for an MBMS,
transmit, to a plurality of terminals, a radio resource control, RRC, MBSFN area configuration message of a multicast control channel, MCCH, the RRC MBSFN area configuration message including the DRX parameter values included in the M2 MBMS scheduling information message and a DRX indicator value indicating whether a DRX mode is applied,
wherein the DRX inactivity timer indicates a number of multicast scheduling information, MSI, counts in which data is not transmitted and which becomes a reference when a terminal of the plurality of terminals is transitioned from normal operation to a short DRX mode;
the short DRX cycle timer indicates a number of reception cycle counts in which data is not transmitted, and becomes a reference when the terminal is transitioned from the short DRX mode to a long DRX mode;
the short duration timer indicates a value that determines the reception cycle in the short DRX cycle of the terminal;
the long duration timer indicates a value that determines the reception cycle in the long DRX cycle of the terminal;
identify whether a time for transmitting first data is a reception cycle of the terminals (150) based on the DRX parameter values and the DRX indicator value,
storing the first data in a buffer in case of a first time is not a reception cycle of the terminals; and
transmit, to the plurality of terminals, the first data and second data to be transmitted at a second time to the terminal at the second time that is the reception cycle of the terminal that comes after the at least one first time .

**5.** The base station of claim 4,
wherein the first and second data include voice packets.

**6.** A terminal (150, 700) in a mobile communication system, the terminal comprising:

a transceiver; and
a controller coupled with the transceiver and configured to:

receive, from a base station (140, 703) a radio resource, RRC, multicast-broadcast single frequency network, MBSFN, area configuration message of a multicast control channel, MCCH, the RRC MBSFN area configuration message including discontinuous reception, DRX, parameter values for reception of packets associated with a multicast broadcast multicast service, MBMS, and a DRX indicator value indicating whether a DRX mode is applied, the DRX parameter values including a DRX inactivity timer, a short duration timer, a long duration timer, and a short DRX cycle timer for the MBMS,

wherein the DRX inactivity timer indicates a number of multicast scheduling information, MSI, counts in which data is not transmitted and which becomes a reference when the terminal s is transitioned from normal operation to a short DRX mode;

the short DRX cycle timer indicates a number of reception cycle counts in which data is not transmitted, and becomes a reference when the terminal is transitioned

from the short DRX mode to a long DRX mode;

the short duration timer indicates a value that determines the reception cycle in the short DRX cycle of the terminal;

the long duration timer indicates a value that determines the reception cycle in the long DRX cycle of the terminal;

identify the DRX parameter values, and

operating the DRX inactivity timer if the DRX indicator value indicates that a DRX cycle of the terminal does not proceed and operating the long duration timer if the DRX indicator value indicates that the DRX cycle of the terminal proceeds;

wherein, when operating the DRX inactivity timer, monitoring multicast scheduling information, MSI, in a multicast channel scheduling period, MSP, and if there is no data transmission in the MSI as many as the number of times set in the DRX inactivity timer, the inactivity timer expires and the terminal transitions to the short DRX state;

while operating in the short DRX mode, waking up in the

determined reception cycle and monitoring an MSI MAC control element in a foremost portion of the MSP, and if there is no data transmission in the MSI as many as the number of times set in the short duration timer, transitioning to the long DRX mode;

while operating in the long DRX mode, waking up in the

determined reception cycle and monitoring an MSI MAC control element in a foremost portion of the MSP, and

receive, from the base station, data based on the scheduling information and transitioning from either the short or the long DRX mode to a normal reception mode if data is received.

**Patentansprüche**

1. Verfahren, das von einer Basisstation (140) in einem mobilen Kommunikationssystem durchgeführt wird, wobei das Verfahren Folgendes umfasst:

Empfangen (S710) einer M2-Sitzungsstart-Anforderungsnachricht zum Starten einer Multicast-Broadcast-Multicast-Dienst(MBMS)-Sitzung von einer Multi-Cell/Multicast-Coordination Entity, MCE (130);
Empfangen (S720) einer M2-MBMS(Planungsinformationsnachricht) von der MCE, die Informationen über die Zuweisung von Ressourcen zu der MBMS-Sitzung in einem Multicast-Broadcast-Single-Frequency-Network(MBSFN)-Bereich und DRX(diskontinuierlicher Empfangs)-Parameterwerte enthält, wobei die DRX-Parameterwerte einen DRX-Inaktivitätszeitgeber, einen Zeitgeber mit kurzer Dauer, einen Zeitgeber mit langer Dauer, und einen Zeitgeber für einen kurzen DRX-Zyklus für einen MBMS enthalten;
Übertragen (S730) einer Radio Resource Control(RRC)-MBSFN-Bereichskonfigurationsnachricht eines Multicast-Steuerkanals, MCCH an eine Vielzahl von Endgeräten (150), wobei die RRC-MBSFN-Bereichskonfigurationsnachricht die DRX-Parameterwerte, die in der M2-MBMS-Planungsinformationsnachricht enthalten sind und einen DRX-Indikatorwert enthält, der anzeigt, ob ein DRX-Modus angewandt wird;
wobei der DRX-Inaktivitätszeitgeber eine Anzahl von Multicast-Planungsinformationen(MSI)-Zählungen angibt, in denen Daten nicht übertragen werden und er wird zu einem Bezug, wenn ein Endgerät der Vielzahl von Endgeräten vom Normalbetrieb in einen kurzen DRX-Modus übergeht;
der kurze DRX-Zykluszeitgeber gibt eine Anzahl von Empfangszykluszählungen an, in denen Daten nicht übertragen werden, und er wird zu einem Bezug, wenn das Endgerät der Vielzahl von Endgeräten von dem kurzen DRX-Modus in einen langen DRX-Modus übergeht;
der Zeitgeber mit kurzer Dauer gibt einen Wert an, der den Empfangszyklus in dem kurzen DRX-Zyklus des Endgeräts bestimmt;
der Zeitgeber mit langer Dauer gibt einen Wert an, der den Empfangszyklus in dem langen DRX-Zyklus des Endgeräts bestimmt;
Identifizieren, ob eine Zeit zum Übertragen von ersten Daten ein Empfangszyklus der Endgeräte (150) ist, basierend auf den DRX-Parameterwerten und dem DRX-Indikatorwert;
Speichern der ersten Daten in einem Puffer im Falle, dass ein erstes Mal kein Empfangszyklus der Endgeräte ist; und

Übertragen der ersten und zweiten Daten, die zu einem zweiten Zeitpunkt an das Endgerät zu übertragen sind, an die Vielzahl von Endgeräten zu dem zweiten Zeitpunkt, d.h. der Empfangszyklus des Endgeräts, der nach dem mindestens einen ersten Zeitpunkt kommt.

2. Verfahren nach Anspruch 1, wobei die ersten und die zweiten Daten Sprachpakete enthalten.

3. Verfahren, das von einem Endgerät (150, 700) in einem mobilen Kommunikationssystem durchgeführt wird, wobei das Verfahren Folgendes umfasst:

Empfangen einer Radio Resource(RRC)-Multicast Broadcast Single Frequency Network(MBSFN)-Bereichskonfigurationsnachricht eines Multicast-Steuerkanals, MCCH, von einer Basisstation (140, 703), wobei die RRC-MBSFN-Bereichskonfigurationsnachricht DRX(diskontinuierlicher Empfangs)-Parameterwerte zum Empfang von Paketen, die mit einem Multicast Broadcast Multicast-Dienst, MBMS, assoziiert werden und einen DRX-Indikatorwert enthält, der angibt, ob ein DRX-Modus angewandt wird, wobei die DRX-Parameterwerte einen DRX-Inaktivitätszeitgeber, einen Zeitgeber mit kurzer Dauer, einen Zeitgeber mit langer Dauer, und einen Zeitgeber für kurzen DRX-Zyklus für den MBMS enthalten;

wobei der DRX-Inaktivitätszeitgeber eine Anzahl von Multicast-Planungsinformationen(MSI)-Zählungen angibt, in denen Daten nicht übertragen werden und er wird zu einem Bezug, wenn das Endgerät s vom Normalbetrieb in einen kurzen DRX-Modus übergeht:

der kurze DRX-Zyklus-Zeitgeber gibt eine Anzahl von Empfangszykluszählungen an, in denen Daten nicht übertragen werden, und er wird zu einem Bezug, wenn das Endgerät vom kurzen DRX-Modus in einen langen DRX-Modus übergeht;

der Zeitgeber mit kurzer Dauer gibt einen Wert an, der den Empfangszyklus in dem kurzen DRX-Zyklus des Endgeräts bestimmt;

der Zeitgeber mit langer Dauer gibt einen Wert an, der den Empfangszyklus in dem langen DRX-Zyklus des Endgeräts bestimmt;

Identifizieren der DRX-Parameterwerte; und

Betreiben des DRX-Inaktivitätszeitgebers, wenn der DRX-Indikatorwert angibt, dass ein DRX-Zyklus des Endgeräts nicht fortgesetzt wird und Betreiben des Zeitgebers mit langer Dauer, wenn der DRX-Indikatorwert angibt, dass der DRX-Zyklus des Endgeräts fortgesetzt wird;

wobei, wenn der DRX-Inaktivitätszeitgeber betrieben wird, Überwachen der Multicast-Planungsinformationen, MSI, in einer Multicast-Kanal-Planungsperiode, MSP, und wenn in den MSI so oft keine Datenübertragung stattfindet, wie es im DRX-Inaktivitätszeitgeber eingestellt wird, läuft der Inaktivitätszeitgeber ab und das Endgerät geht in den kurzen DRX-Zustand über;

während des Betriebs in dem kurzen DRX-Modus, Aufwachen in dem bestimmten Empfangszyklus und Überwachen eines MSI-MAC-Steuerelements in einem vordersten Teil der MSP, und wenn keine Datenübertragung in den MSI so oft erfolgt wie es im Zeitgeber mit kurzer Dauer eingestellt ist, Übergehen in den langen DRX-Modus;

während des Betriebs in dem langen DRX-Modus, Aufwachen in dem bestimmten Empfangszyklus und Überwachen eines MSI-MAC-Steuerelements in einem vordersten Teil der MSP, und

Empfangen von Daten von der Basisstation, basierend auf den Planungsinformationen und Übergehen von entweder dem kurzen oder dem langen DRX-Modus in einen normalen Empfangsmodus, wenn Daten empfangen werden.

4. Basisstation (140, 703) in einem mobilen Kommunikationssystem, wobei die Basisstation Folgendes umfasst:

einen Transceiver; und

eine Steuerung, die mit dem Transceiver gekoppelt und konfiguriert ist zum:

Empfangen einer M2-Sitzungsstart-Anforderungsnachricht zum Starten einer Multicast Broadcast Multicast-Dienst(MBMS)-Sitzung von einer Multi-Cell/Multicast Coordination Entity, MCE (130),

Empfangen einer M2-MBMS-Planungsinformationsnachricht von der MCE, welche Informationen über die Zuweisung von Ressourcen der MBMS-Sitzung in einem Multicast-Broadcast Single Frequency Network(MBSFN)-Bereich und DRX(diskontinuierlicher Empfang)-Parameterwerte enthält, wobei die DRX-Parameterwerte einen DRX-Inaktivitätszeitgeber, einen Zeitgeber mit kurzer Dauer, einen Zeitgeber mit langer Dauer, und einen Zeitgeber für kurzen DRX-Zyklus für einen MBMS enthalten,

Übertragen einer Radio Resource Control(RRC)-MBSFN-Bereichskonfigurationsnachricht eines Multicast-Steuerkanals, MCCH, an eine Vielzahl von Endgeräten, wobei die RRC-MBSFN-Bereichskonfigurationsnachricht DRX-Parameterwerte, die in der M2 MBMS-Planungsinformationsnachricht enthalten sind und einen DRX-Indikator-Wert enthält, der angibt, ob ein DRX-Modus angewandt wird,

wobei der DRX-Inaktivitätszeitgeber eine Anzahl von Multicast-Planungsinformationen(MSI)-Zählungen angibt, in denen Daten nicht übertragen werden und er wird zu einem Bezug, wenn ein Endgerät der Vielzahl von Endgeräten vom Normalbetrieb in einen kurzen DRX-Modus übergeht;

der kurze DRX-Zyklus-Zeitgeber gibt eine Anzahl von Empfangszykluszählungen an, in denen Daten nicht übertragen werden, und er wird zu einem Bezug, wenn das Endgerät vom kurzen DRX-Modus in einen langen DRX-Modus übergeht;

der Zeitgeber mit kurzer Dauer gibt einen Wert an, der den Empfangszyklus in dem kurzen DRX-Zyklus des Endgeräts bestimmt;

der Zeitgeber mit langer Dauer gibt einen Wert an, der den Empfangszyklus in dem langen DRX-Zyklus des Endgeräts bestimmt;

Identifizieren, ob eine Zeit zum Übertragen von ersten Daten ein Empfangszyklus der Endgeräte (150) ist, basierend auf den DRX-Parameterwerten und dem DRX-Indikatorwert,

Speichern der ersten Daten in einem Puffer im Falle, dass ein erstes Mal kein Empfangszyklus der Endgeräte ist; und

Übertragen der ersten und zweiten Daten, die zu einem zweiten Zeitpunkt an das Endgerät zu übertragen sind, an die Vielzahl von Endgeräten zu dem zweiten Zeitpunkt, d.h. der Empfangszyklus des Endgeräts, der nach dem mindestens einen ersten Zeitpunkt kommt.

5. Basisstation nach Anspruch 4,
   wobei die ersten und die zweiten Daten Sprachpakete umfassen.

6. Endgerät (150,700) in einem mobilen Kommunikationssystem, wobei das Endgerät folgendes umfasst:

   einen Transceiver; und
   eine Steuerung, die mit dem Transceiver gekoppelt wird und konfiguriert ist zum:

   Empfangen einer Radio Resource(RRC)-Multicast Broadcast Single Frequency Network(MBSFN)-Bereichskonfigurationsnachricht eines Multicast-Steuerkanals, MCCH, von einer Basisstation (140, 703), wobei die RRC-MBSFN-Bereichskonfigurationsnachricht DRX(diskontinuierlicher Empfangs)-Parameterwerte zum Empfang von Paketen, die mit einem Multicast Broadcast Multicast-Dienst, MBMS, assoziiert werden und einen DRX-Indikatorwert enthält, der angibt, ob ein DRX-Modus angewandt wird, wobei die DRX-Parameterwerte einen DRX-Inaktivitätszeitgeber, einen Zeitgeber mit kurzer Dauer, einen Zeitgeber mit langer Dauer, und einen Zeitgeber für kurzen DRX-Zyklus für den MBMS enthalten;

   wobei der DRX-Inaktivitätszeitgeber eine Anzahl von Multicast-Planungsinformationen(MSI)-Zählungen angibt, in denen Daten nicht übertragen werden und er wird zu einem Bezug, wenn das Endgerät s vom Normalbetrieb in einen kurzen DRX-Modus übergeht:

   der kurze DRX-Zyklus-Zeitgeber gibt eine Anzahl von Empfangszykluszählungen an, in denen Daten nicht übertragen werden, und er wird zu einem Bezug, wenn das Endgerät vom kurzen DRX-Modus in einen langen DRX-Modus übergeht;

   der Zeitgeber mit kurzer Dauer gibt einen Wert an, der den Empfangszyklus in dem kurzen DRX-Zyklus des Endgeräts bestimmt;

   der Zeitgeber mit langer Dauer gibt einen Wert an, der den Empfangszyklus in dem langen DRX-Zyklus des Endgeräts bestimmt;

   Identifizieren der DRX-Parameterwerte; und

   Betreiben des DRX-Inaktivitätszeitgebers, wenn der DRX-Indikatorwert angibt, dass ein DRX-Zyklus des Endgeräts nicht fortgesetzt wird und Betreiben des Zeitgebers mit langer Dauer, wenn der DRX-Indikatorwert angibt, dass der DRX-Zyklus des Endgeräts fortgesetzt wird;

   wobei, wenn der DRX-Inaktivitätszeitgeber betrieben wird, Überwachen der Multicast-Planungsinformationen, MSI, in einer Multicast-Kanal-Planungsperiode, MSP, und wenn in den MSI so oft keine Datenübertragung stattfindet, wie es im DRX-Inaktivitätszeitgeber eingestellt wird, läuft der Inaktivitätszeitgeber ab und das Endgerät geht in den kurzen DRX-Zustand über;

während des Betriebs in dem kurzen DRX-Modus, Aufwachen in dem bestimmten Empfangszyklus und Überwachen eines MSI-MAC-Steuerelements in einem vordersten Teil der MSP, und wenn keine Datenübertragung in der MSI so oft erfolgt wie es im Zeitgeber mit kurzer Dauer eingestellt ist, Übergehen in den langen DRX-Modus; während des Betriebs in dem langen DRX-Modus, Aufwachen in dem bestimmten Empfangszyklus und Überwachen eines MSI-MAC-Steuerelements in einem vordersten Teil der MSP, und Empfangen von Daten von der Basisstation, basierend auf den Planungsinformationen und Übergehen von entweder dem kurzen oder dem langen DRX-Modus in einen normalen Empfangsmodus, wenn Daten empfangen werden.

## Revendications

1.  Procédé mis en œuvre par une station de base (140) dans un système de communication mobile, le procédé comprenant :

    recevoir (S710), à partir d'une entité de coordination de multi-cellule/multidiffusion, MCE, (130), un message de demande de début de session M2 pour démarrer une session de service de diffusion/multidiffusion multimédia, MBMS ;
    recevoir (S720), à partir de la MCE, un message d'informations de programmation de MBMS M2 comprenant des informations sur l'attribution de ressources à la session de MBMS dans une zone de réseau de diffusion/multidiffusion à fréquence unique, MBSFN, et des valeurs de paramètre de réception discontinue, DRX, les valeurs de paramètre de DRX comprenant un temporisateur d'inactivité de DRX, un temporisateur de courte durée, un temporisateur de longue durée, et un temporisateur de cycle de DRX court pour un MBMS ;
    transmettre (S730), à une pluralité de terminaux (150), un message de configuration de zone de MBSFN de contrôle de ressources radio, RRC, d'un canal de commande de multidiffusion, MCCH, le message de configuration de zone de MBSFN de RRC comprenant les valeurs de paramètre de DRX inclus dans le message d'informations de programmation de MBMS M2 et une valeur d'indicateur de DRX indiquant si un mode de DRX est appliqué ;
    où le temporisateur d'inactivité de DRX indique un certain nombre de comptes d'informations de programmation de multidiffusion, MSI, où des données ne sont pas transmises et qui devient une référence lorsqu'un terminal de la pluralité de terminaux passe d'un fonctionnement normal à un mode de DRX court ;
    le temporisateur de cycle de DRX court indique un nombre de comptes de cycles de réception où des données ne sont pas transmises, et devient une référence lorsque le terminal de la pluralité de terminaux passe du mode de DRX court à un mode de DRX long ;
    le temporisateur de courte durée indique une valeur qui détermine le cycle de réception dans le cycle de DRX court du terminal ;
    le temporisateur de longue durée indique une valeur qui détermine le cycle de réception dans le cycle de DRX long du terminal ;
    identifier si un temps pour transmettre des premières données est un cycle de réception des terminaux (150) sur la base des valeurs de paramètre de DRX et de la valeur d'indicateur de DRX ;
    stocker les premières données dans une mémoire tampon dans le cas où un premier temps ne serait pas un cycle de réception des terminaux ; et
    transmettre, à la pluralité de terminaux, les premières données et les deuxièmes données à être transmises à un deuxième temps au terminal au deuxième temps qui est le cycle de réception du terminal qui vient après l'au moins un premier temps.

2.  Procédé selon la revendication 1, où les premières et les deuxièmes données comprennent des paquets vocaux.

3.  Procédé mis en œuvre par un terminal (150, 700) dans un système de communication mobile, le procédé comprenant :

    recevoir, à partir d'une station de base (140, 703), un message de configuration de zone de réseau de diffusion/multidiffusion à fréquence unique, MBSFN, de ressources radio, RRC, d'un canal de commande de multidiffusion, MCCH, le message de configuration de zone de MBSFN de RRC comprenant des valeurs de paramètre de réception discontinue, DRX, pour la réception de paquets associés à un service de diffusion/multidiffusion multimédia, MBMS, et une valeur d'indicateur de DRX indiquant si un mode de DRX est appliqué, les valeurs de paramètre de DRX comprenant un temporisateur d'inactivité de DRX, un temporisateur de courte durée, un temporisateur de longue durée, et un temporisateur de cycle de DRX court pour le MBMS ;

où le temporisateur d'inactivité de DRX indique un certain nombre de comptes d'informations de programmation de multidiffusion, MSI, où des données ne sont pas transmises et qui devient une référence lorsque le terminal s passe du fonctionnement normal à un mode de DRX court ;

le temporisateur de cycle de DRX court indique un certain nombre de comptes de cycles de réception où des données ne sont pas transmises, et devient une référence lorsque le terminal passe du mode de DRX court à un mode de DRX long ;

le temporisateur de courte durée indique une valeur qui détermine le cycle de réception dans le cycle de DRX court du terminal ;

le temporisateur de longue durée indique une valeur qui détermine le cycle de réception dans le cycle de DRX long du terminal ;

identifier les valeurs de paramètre de DRX ; et

faire fonctionner le temporisateur d'inactivité de DRX si la valeur d'indicateur de DRX indique qu'un cycle de DRX du terminal ne se poursuit pas et faire fonctionner le temporisateur de longue durée si la valeur d'indicateur de DRX indique que le cycle de DRX du terminal se poursuit ;

où, lors du fonctionnement du temporisateur d'inactivité de DRX, surveiller des informations de programmation de multidiffusion, MSI, dans une période de programmation de canal de multidiffusion, MSP, et s'il n'y a pas autant de transmissions de données dans les MSI que le nombre de fois établi dans le temporisateur d'inactivité de DRX, le temporisateur d'inactivité expire et le terminal passe à l'état de DRX court ;

tout en fonctionnant dans le mode de DRX court, se réveiller dans le cycle de réception déterminé et surveiller un élément de commande de MAC de MSI dans une partie avant de la MSP, et s'il n'y a pas autant de transmissions de données dans les MSI que le nombre de fois établi dans le temporisateur de courte durée, passer au mode de DRX long ;

tout en fonctionnant dans le mode de DRX long, se réveiller dans le cycle de réception déterminé et surveiller un élément de commande de MAC de MSI dans une partie avant de la MSP, et

recevoir, à partir de la station de base, des données sur la base des informations de programmation et passer soit du mode de DRX court soit du mode de DRX long à un mode de réception normal si des données sont reçues.

4. Station de base (140, 703) dans un système de communication mobile, la station de base comprenant :

un émetteur-récepteur ; et
un contrôleur couplé à l'émetteur-récepteur et configuré pour :

recevoir, à partir d'une entité de coordination de multi-cellule/multidiffusion, MCE, (130,706) un message de demande de début de session M2 pour démarrer une session de service de diffusion/multidiffusion, MBMS,

recevoir, à partir de la MCE, un message d'informations de programmation de MBMS M2 comprenant des informations sur l'attribution de ressources à la session de MBMS dans une zone de réseau de diffusion/multidiffusion à fréquence unique, MBSFN, et des valeurs de paramètre de réception discontinue, DRX, les valeurs de paramètre de DRX comprenant un temporisateur d'inactivité de DRX, un temporisateur de courte durée, un temporisateur de longue durée, et un temporisateur de cycle de DRX court pour un MBMS,

transmettre, à une pluralité de terminaux, un message de configuration de zone de MBSFN de contrôle de ressources radio, RRC, d'un canal de commande de multidiffusion, MCCH, le message de configuration de zone de MBSFN de RRC comprenant les valeurs de paramètre de DRX inclus dans le message d'informations de programmation de MBMS M2 et une valeur d'indicateur de DRX indiquant si un mode de DRX est appliqué,

où le temporisateur d'inactivité de DRX indique un certain nombre de comptes d'informations de programmation de multidiffusion, MSI, où des données ne sont pas transmises et qui devient une référence lorsqu'un terminal de la pluralité de terminaux passe d'un fonctionnement normal à un mode de DRX court ;

le temporisateur de cycle de DRX court indique un certain nombre de comptes de cycles de réception où des données ne sont pas transmises, et devient une référence lorsque le terminal passe du mode de DRX court à un mode de DRX long ;

le temporisateur de courte durée indique une valeur qui détermine le cycle de réception dans le cycle de DRX court du terminal ;

le temporisateur de longue durée indique une valeur qui détermine le cycle de réception dans le cycle de DRX long du terminal ;

identifier si un temps pour transmettre des premières données est un cycle de réception des terminaux (150) sur la base des valeurs de paramètre de DRX et de la valeur d'indicateur de DRX,

stocker les premières données dans une mémoire tampon dans le cas où un premier temps ne serait pas un cycle de réception des terminaux ; et

transmettre, à la pluralité de terminaux, les premières données et les deuxièmes données à être transmises à un deuxième temps au terminal au deuxième temps qui est le cycle de réception du terminal qui vient après l'au moins un premier temps.

**5.** Station de base selon la revendication 4,
où les premières et les deuxièmes données comprennent des paquets vocaux.

**6.** Terminal (150, 700) dans un système de communication mobile, le terminal comprenant :

un émetteur-récepteur ; et
un contrôleur couplé à l'émetteur-récepteur et configuré pour :

recevoir, à partir d'une station de base (140, 703), un message de configuration de zone de réseau de diffusion/multidiffusion à fréquence unique, MBSFN, de contrôle de ressources radio, RRC, d'un canal de commande de multidiffusion, MCCH, le message de configuration de zone de MBSFN de RRC comprenant des valeurs de paramètre de réception discontinue, DRX, pour la réception de paquets associés à un service de diffusion/multidiffusion multimédia, MBMS, et une valeur d'indicateur de DRX indiquant si un mode de DRX est appliqué, les valeurs de paramètre de DRX comprenant un temporisateur d'inactivité de DRX, un temporisateur de courte durée, un temporisateur de longue durée, et un temporisateur de cycle de DRX court pour le MBMS,

où le temporisateur d'inactivité de DRX indique un certain nombre de comptes d'informations de programmation de multidiffusion, MSI, où des données ne sont pas transmises et qui devient une référence lorsque le terminal s passe d'un fonctionnement normal à un mode de DRX court ;

le temporisateur de cycle de DRX court indique un certain nombre de comptes de cycles de réception où des données ne sont pas transmises, et devient une référence lorsque le terminal passe du mode de DRX court à un mode de DRX long ;

le temporisateur de courte durée indique une valeur qui détermine le cycle de réception dans le cycle de DRX court du terminal ;

le temporisateur de longue durée indique une valeur qui détermine le cycle de réception dans le cycle de DRX long du terminal ;

identifier les valeurs de paramètre de DRX, et

faire fonctionner le temporisateur d'inactivité de DRX si la valeur d'indicateur de DRX indique qu'un cycle de DRX du terminal ne se poursuit pas et faire fonctionner le temporisateur de longue durée si la valeur d'indicateur de DRX indique que le cycle de DRX du terminal se poursuit ;

où, lors du fonctionnement du temporisateur d'inactivité de DRX, surveiller des informations de programmation de multidiffusion, MSI, dans une période de programmation de canal de multidiffusion, MSP, et s'il n'y a pas autant de transmissions de données dans les MSI que le nombre de fois établi dans le temporisateur d'inactivité de DRX, le temporisateur d'inactivité expire et le terminal passe à l'état de DRX court ;

tout en fonctionnant dans le mode de DRX court, se réveiller dans le cycle de réception déterminé et surveiller un élément de commande de MAC de MSI dans une partie avant de la MSP, et s'il n'y a pas autant de transmissions de données dans les MSI que le nombre de fois défini dans le temporisateur de courte durée, passer au mode de DRX long ;

tout en fonctionnant dans le mode de DRX long, se réveiller dans le cycle de réception déterminé et surveiller un élément de commande de MAC de MSI dans une partie avant de la MSP, et

recevoir, à partir de la station de base, des données sur la base des informations de programmation et passer soit du mode de DRX court soit du mode de DRX long à un mode de réception normal si les données sont reçues.

# FIG. 1

- – – – eMBMS Signaling
- –·– eMBMS Bearer
- ------- GCSE Signaling
- – – GCSE Bearer

EP 3 713 153 B1

FIG. 2

Start drx-shortCycle Timer
after drx-inactivity Timer elapses

FIG. 3

# FIG. 4

| LCID 1 | Stop MTCH 1 | Oct 1 |
|:---:|:---:|:---|
| Stop MTCH 1 | | Oct 2 |
| LCID 2 | Stop MTCH 2 | Oct 3 |
| Stop MTCH 2 | | Oct 4 |

. . .

| LCID n | Stop MTCH n | Oct 2n-1 |
|:---:|:---:|:---|
| Stop MTCH n | | Oct 2n |

FIG. 5

EP 3 713 153 B1

FIG. 6

base station 600

MCE 605

M2 MBMS SCHEDULING INFORMATION S610

M2 MBMS SCHEDULING INFORMATION RESPONSE S620

FIG. 7

FIG. 8

terminal — 800    base station — 803    BM-SC — 806

| NO eMBMS Traffic Inacivity Timer | S810 |

| Short DRX on | S820 |

| Long DRX on | S830 |

| eMBMS Traffic DRX off | S840 |

# FIG. 9

FIG. 10

1000

1010

1020

| Transceiver | Controller | Memory |

FIG. 11

1100

Transceiver

1120

Controller

1110

Memory

FIG. 12

1200

1220

1210

| Transceiver | Controller | Memory |

FIG. 13

2. Session Start Message
TMGI/ QCI

1. TMGI, QCI

MCE

BM-SC

3. DRX
parameter transfer

4. DRX parameter
transfer

terminal

eNB

5. Terminal and eNB perform DRX operation

FIG. 14

1. DRX parameter transfer

3. Session Start Message
TMGI/ QCI

2. TMGI, QCI
DRX parameter

MCE ← BM-SC ← PTT application server

4. DRX parameter transfer

terminal ← eNB

5. Terminal and eNB perform DRX operation

FIG. 15

DRX parameters

terminal

eNB

PTT
Application

eBMS
Middleware

terminal operation system

Modem

DRX parameter

# FIG. 16

SDP: DRX parameters

terminal

LTE Network

PTT application
server

DRX
parameters

PTT
Application

API

eBMS
Middleware

terminal operation system

API

Modem

# FIG. 17

SDP: DRX parameters

DRX parameters

terminal

LTE Network

PTT application server

terminal operation system

PTT Application

API

eBMS Middleware

API

Modem

# FIG. 18

| PTT AS | BMSC | MBMS-GW | UE1 (Creator) |
|---|---|---|---|

Create MBMS Bearer

Group call creation

Ⅰ. Group call creation request

INVITE (Group call creation)

(Unicast m Line Only)

200OK

(Unicast m Line Only)

ACK

MBMS Announcement(SIP INFO)

200OK

MBMS connection

UPDATE

MBMS(Recvonly), Unicast(Sendonly)

200OK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2234420 A1
- US 20140086208 A1